# EUROPEAN PATENT APPLICATION

(11) **EP 4 610 524 A1**
(43) Date of publication of application: **03.09.2025**
(21) Application number: 24160269.7
(22) Date of filing: 28.02.2024
(51) Int. Cl.: F16H 63/36

(54) **GEARBOX ACTUATOR, VEHICLE TRANSMISSION SYSTEM, COMMERCIAL VEHICLE, AND METHOD OF MANUFACTURING A PUSHROD**

(71) Applicant: ZF CV Systems Europe BV, 1170 Brüssel (BE)
(72) Inventor: ZELEK, Jedrzej, 51-163 Wroclaw (PL)
(74) Representative: Schäferjohann, Volker

(57) **Abstract**

A gearbox actuator (10) comprises a pushrod (11) extending along a longitudinal axis (LA1), a pin (30) extending along a pin axis (PA), and a pin guide arrangement (40, 41). The pushrod (11) comprises a pushrod recess (20). The pin guide arrangement (40, 41) is configured to guide the pin (30) upon pin displacement along the pin axis (PA). The pin guide arrangement (40, 41) comprises at least one guide wall portion (41) formed in the pushrod (11).

## Description

The invention relates to a gearbox actuator and a vehicle transmission system for a vehicle, such as a commercial vehicle. The invention relates in particular to a gearbox actuator comprising a pin configured to selectively block pushrod displacement.

A gearbox actuator, also known as a transmission actuator, is a component for commercial vehicles that is responsible for accurately and efficiently shifting gears of a transmission. Gearbox actuators with various features and configurations are known to enhance performance and reliability.

A gearbox actuator often comprises pushrods coupled to or comprising shift forks to engage and disengage gears. These pushrods are typically actuated by an electric motor or a fluidic (pneumatic or hydraulic) displacement mechanism. When a gear change is required, a displacement mechanism activates the respective pushrod, which in turn moves the associated shift fork to engage or disengage the intended gear. To ensure accurate and reliable gear shifting, the gearbox actuator may comprise a mechanisms that selectively blocks movement of a pushrod, preventing the undesired concurrent engagement of two different gears that should not be engaged simultaneously. EP 4 170 205 A1 and EP 1 626 209 A1 disclose components and mechanisms configured for use in transmission systems.

There is a need in the art for an improved gearbox actuator that allows a pushrod to be selectively blocked from being displaced. There is in particular a need for such a gearbox actuator that offers advantages with regard to a guide arrangement for a pin configured to selectively block displacement of the pushrod, e.g., by facilitating construction and/or assembly of the gearbox actuator.

The problem underlying the invention resides in addressing the need for an improved gearbox actuator. The problem underlying the invention resides in particular in providing a gearbox actuator that offers advantages with regard to a guide arrangement for a pin configured to selectively block displacement of a pushrod.

According to aspects of the invention, a gearbox actuator, a vehicle transmission system, a commercial vehicle, and a manufacturing method are provided. The dependent claims define embodiments.

According to an aspect of the invention, there is provided a gearbox actuator. The gearbox actuator comprises a pushrod extending along a longitudinal axis. The pushrod comprises a pushrod recess. The gearbox actuator comprises a pin extending along a pin axis, the pin axis being transverse to the longitudinal axis. The gearbox actuator comprises a pin guide arrangement. The pin guide arrangement is configured to guide the pin upon pin displacement along the pin axis between a first pin position in which the pin projects into the pushrod recess and allows displacement of the pushrod along the longitudinal axis and a second pin position in which the pin projects into the pushrod recess and is configured to secure the pushrod against displacement along the longitudinal axis. The pin guide arrangement comprises at least one guide wall portion formed in the pushrod, the at least one guide wall portion being configured to limit or prevent displacement of an end of the pin in a direction that is perpendicular to both the longitudinal axis and the pin axis.

Various effects are attained by the gearbox actuator. The gearbox actuator is configured such that the pin projects into the pushrod recess even when the pin is in the first pin position in which the pin allows displacement of the pushrod along the longitudinal axis. Thereby, the pushrod itself can perform a guide function for the pin, by limiting or preventing the displacement of the pin in the direction that is transverse to the longitudinal axis of the pushrod and transverse to the pin axis. This facilitates the construction of a transmission system comprising the gearbox actuator and/or assembly of the pin to, e.g., the transmission system. The pin and the pushrod may be comprised by a gearbox actuator comprising a housing portion configured to slidingly receive the pin, wherein the housing portion can have a configuration that allows it to be efficiently manufactured because part of the pin guiding function is performed by the at least one guide wall portion formed in the pushrod.

The at least one guide wall portion may comprise a first guide wall portion and a second guide wall portion, wherein the first guide wall portion extends parallel to the longitudinal axis and the second guide wall portion extends parallel to the longitudinal axis.

Thereby, the first guide wall portion and the second guide wall portion can contribute to securing the pin against displacement in the direction that is perpendicular to both the longitudinal axis and the pin axis. The first guide wall portion and the second guide wall portion may be side surfaces delimiting the pushrod recess.

The pin end may be positioned in a space between the first guide wall portion and the second guide wall portion when the pin is in the first pin position and when the pin is in the second pin position.

Thereby, the first guide wall portion and the second guide wall portion can contribute to securing the pin against displacement in the direction that is perpendicular to both the longitudinal axis and the pin axis, by providing movement limiting surfaces irrespective of whether the pin is in the first pin position, the second pin position, or any other pin position (e.g., any intermediate pin position between the first pin position and the second pin position).

The first guide wall portion may additionally extend parallel to the pin axis. The second guide wall portion may extend parallel to the longitudinal axis and parallel to the pin axis. The second guide wall portion may be offset from the first guide wall portion along the direction that is transverse to both the longitudinal axis and the pin axis.

Thereby, the first guide wall portion and the second guide wall portion can contribute to securing the pin against displacement in the direction that is perpendicular to both the longitudinal axis and the pin axis.

The first guide wall portion and the second guide wall portion may define the longer side walls of the pushrod recess, extending along the longitudinal axis of the pushrod.

Thereby, the first guide wall portion and the second guide wall portion can contribute to securing the pin against displacement in the direction that is perpendicular to both the longitudinal axis and the pin axis, while enabling translatory displacement of the pushrod along the longitudinal axis.

The first guide wall portion and the second guide wall portion may be configured to contact the pin to guide the pin upon displacement between the first pin position and the second pin position.

Thereby, the first guide wall portion and the second guide wall portion can contribute to securing the pin against displacement in the direction that is perpendicular to both the longitudinal axis and the pin axis.

The pushrod recess may extend along only part of a circumference of the pushrod.

Thereby, the first guide wall portion and the second guide wall portion can contribute to guiding the pin. The pushrod recess may be limited in extension in a circumferential direction around the longitudinal axis of the pushrod, to allow the first guide wall portion and the second guide wall portion to guide the pin.

The at least one guide wall portion may extend to a depth from a pushrod outer surface portion surrounding the pushrod recess, the depth being measured in a direction perpendicular to the longitudinal axis, wherein the depth varies non-monotonously along the longitudinal axis.

Thereby, the at least one guide wall portion (e.g., the first guide wall portion and the second guide wall portion) can limit movement of the pin end in the direction transverse to the longitudinal axis and the pin axis, while the pushrod and/or a further can travel along the longitudinal axis. By providing first and second guide wall portions that each extend into the pushrod to a depth that varies non-monotonously, the pin can be guided upon pin displacement into and from the second pin position, irrespective of whether the pushrod is in its neutral pushrod position or the gear-engagement pushrod position.

The pushrod recess may comprise a recess bottom surface extending from the at least one guide wall portion, the recess bottom surface comprising a first ramp surface and a second ramp surface. The pin may be configured such that a pin end of the pin that projects into the recess is positioned between the first ramp surface and the second ramp surface when the pin is in the second pin position.

Thereby, the pushrod recess is configured to bring about a pin displacement of the pin responsive to displacement of the pushrod along the longitudinal axis, while providing a simple mechanism of securing the pushrod in a neutral pushrod position when the pin is in the second pin position and the pushrod is to be prevented from being displaced out of its neutral pushrod position. The provision of the first ramp surface and the second ramp surface accommodates a pushrod displacement into two different, opposite displacement directions, e.g., to bring different gears with which the pushrod is associated (such as a pushrod for gears 1/R or a pushrod for gears 2/3) into engagement with a respective mating gear.

The recess bottom surface may comprise a depression configured to receive the pin end therein when the pin is in the second pin position, the depression being arranged between the first ramp surface and the second ramp surface.

Thereby, the pushrod recess is configured to provide a simple mechanism of securing the pushrod in a neutral pushrod position when the pin is in the second pin position and the pushrod is to be prevented from being displaced out of its neutral pushrod position.

The first ramp surface and the second ramp surface may be configured to effect the displacement of the pin along the pin axis responsive to a pushrod displacement of the pushrod along the longitudinal axis.

Thereby, the pushrod recess is configured to bring about a pin displacement of the pin responsive to displacement of the pushrod along the longitudinal axis. In particular, for a pin that projects concurrently into the recess and a further recess of a further pushrod, one of the first ramp surface and the second ramp surface may be configured to effect a displacement of the pin into the first pin position in which the pushrod is free to be displaced along its longitudinal axis, while preventing the further pushrod from being displaced out of its neutral pushrod position. The provision of the first ramp surface and the second ramp surface accommodates a pushrod displacement into two opposite displacement directions along the longitudinal axis, e.g., to bring different gears with which the pushrod is associated into engagement with a respective mating gear.

The pin guide arrangement may comprise a housing portion, the housing portion comprising a concavity configured to slidably receive the pin therein.

Thereby, the at least one guide surface formed into the pushrod can cooperate with the housing portion so as to allow displacement of the pin along substantially only along the pin axis, while preventing or limiting movement of the pin in the two directions transverse to the pin axis. The provision of a guide arrangement that comprises the at least one guide surface formed into the pushrod allows the housing portion having the concavity for slidably receiving the pin to have a configuration that provides ease of manufacture and/or ease of assembly of the gearbox actuator. For illustration, the housing portion that comprises the concavity for slidably receiving the pin may be an integral part of the gearbox actuator housing and/or an automated manual transmission (AMT) housing, which facilitates assembly by obviating the need for screwing a guide housing to the gearbox actuator housing and/or the AMT housing.

The gearbox actuator may comprise a gearbox actuator housing that comprises the housing portion as an integral (i.e., unitarily formed) portion of the gearbox actuator housing. I.e., the gearbox actuator housing may comprise the housing portion comprising the cavity in which the pin is slidably received.

Thereby, the desired movement limiting functions for the pin can be provided by the gearbox actuator housing (which may in turn be integral with the AMT housing), without requiring assembly of a separate pin guide housing to the gearbox actuator housing.

The pin may be configured as a locking pin that is coupled to both the pushrod and a further pushrod.

Thereby, the pin can implement a locking mechanism in which displacement of the pushrod into a gear-engaged pushrod position is selectively allowed conditionally dependent on the further pushrod being in a neutral pushrod position, while locking the pushrod in its neutral pushrod position responsive to the further pushrod being in a gear-engaged pushrod position, and vice versa. This prevents unintentional concurrent engagement of gears of the gearbox that must not be concurrently engaged.

The pin may be configured as a detent pin, wherein the detent pin comprises a bias member (such as a spring) acting on a pin member.

The gearbox actuator may further comprise a further pushrod extending along a further longitudinal axis, the further longitudinal axis being parallel to the longitudinal axis, wherein the further pushrod comprises a further pushrod recess, wherein the pin is configured to extend into the further pushrod recess both when the pin is in the first pin position and when the pin is in the second pin position.

Thereby, the pin may be configured to operate as a locking pin and can prevent that a gear that can be brought into engagement by displacement of the pushrod and a further gear that can be brought into engagement by displacement of the further pushrod are concurrently engaged, if such a concurrent engagement is not foreseen by the gearbox actuator.

The pushrod, the pin, the pin guide arrangement, and the further pushrod may be configured to allow displacement of the pushrod from a neutral pushrod position into a gear-engaged pushrod position (e.g., one of two different gear-engaged pushrod positions into which the pushrod can be placed) selectively conditionally dependent on the further pushrod being in its neutral pushrod position, and to lock the pushrod in the neutral pushrod position responsive to the further pushrod being in the gear-engaged pushrod position (e.g., one of two different gear-engaged pushrod positions into which the further pushrod can be placed). The pushrod, the pin, the pin guide arrangement, and the further pushrod may be configured to allow displacement of the further pushrod from its neutral pushrod position into the gear-engaged pushrod position (e.g., one of two different gear-engaged pushrod positions into which the further pushrod can be placed) selectively conditionally dependent on the pushrod being in the neutral pushrod position, and to lock the further pushrod in its neutral pushrod position responsive to the pushrod being in the gear-engaged pushrod position (e.g., one of two different gear-engaged pushrod positions into which the pushrod can be placed).

Thereby, the gearbox actuator is configured to prevent unintentional concurrent engagement of gears of the gearbox that must not be concurrently in their engaged states.

The pin guide arrangement may comprise at least one further guide wall portion formed in the further pushrod, the at least one further guide wall portion being configured to limit or prevent displacement of the pin in a direction that is perpendicular to both the further longitudinal axis and the pin axis.

Thereby, the at least one further guide wall portion (which may delimit the further recess in the further pushrod) and the at least one guide wall portion (which may delimit the recess in the pushrod) may secure opposite pin ends of the pin against movement in the direction that is transverse to both the longitudinal axis and the pin axis.

The recess and the further recess may have a same geometrical configuration.

Thereby, ease of manufacture is attained (e.g., by allowing the recess and the further recess to be machined using a same milling operation).

The recess and the further recess may have different shapes and/or dimensions (e.g., different lengths along the longitudinal axis, different ramp inclination angles relative to the longitudinal axis, etc.).

Thereby, differences between the pushrod and the further pushrod, such as different travel paths between neutral pushrod position and gear-engaged pushrod position(s), can be accommodated.

The further pushrod may be displaceable between a neutral pushrod position and a gear-engagement pushrod position. The gearbox actuator may be configured such that the further pushrod secures the pin in the second pin position when the further pushrod is in the further gear-engagement pushrod position.

Thereby, the gearbox actuator is configured to prevent unintentional concurrent engagement of gears of the gearbox that must not be concurrently engaged.

The pushrod recess may be milled into the pushrod and/or the further recess may be milled into the further pushrod.

Thereby, the geometrical features of the recess and/or the further recess can be provided in an effective manner.

According to a further aspect of the invention, there is provided a vehicle transmission system. The vehicle transmission system comprises a gear set and the gearbox actuator of any aspect or embodiment, which is configured to selectively cause gears of the gearbox to engage.

The vehicle transmission system provides the effects described in association with the gearbox actuator.

The vehicle transmission system may comprise an AMT, wherein the AMT comprises an AMT housing, wherein the gearbox actuator is arranged at the AMT housing.

Thereby, ease of assembly of the AMT is attained.

The AMT housing may comprise the housing portion comprising a receptacle in which the pin is slidably received.

Thereby, ease of assembly of the AMT is attained. The AMT is configured such that the pin is slidably guided by the housing portion comprising the cavity (which may be an integral part of the AMT housing that does not need to be attached to the AMT housing by means of screws or bolts) in cooperation with the guide wall portion(s) delimiting the recess of the pushrod and, if present, the further guide wall portion(s) delimiting the further recess of the further pushrod.

According to a further aspect of the invention, there is provided a vehicle (such as a commercial vehicle) comprising the gearbox actuator or the vehicle transmission system according to an aspect or embodiment.

The vehicle provides the effects described in association with the gearbox actuator and the vehicle transmission system.

According to a further aspect of the invention, there is provided a method of manufacturing a pushrod for a gearbox actuator, comprising performing a milling operation to form the pushrod recess in the pushrod.

Thereby, the pushrod recess can be formed having any one, or any combination of features, discussed in association with the gearbox actuator.

The method may comprise manufacturing the pushrod and/or the further pushrod for the gearbox actuator of any aspect or embodiment, using the milling operation.

Thereby, the pushrod recess can be formed to have any one, or any combination of the features of the pushrod and/or the further pushrod, discussed in association with the gearbox actuator.

According to a further aspect of the invention, there is provided a method of manufacturing a gearbox actuator (such as the gearbox actuator according to any aspect or embodiment), comprising performing a milling operation to form a pushrod recess in a pushrod, assembling the pushrod with at least one displacement mechanism (such as an electric motor or a fluidic displacement mechanism, e.g., a pneumatic or hydraulic piston), assembling the pushrod with a shift fork that is configured to engage and/or disengage gears of a set of gears, and assembling the pin such that the pin projects into the recess of the pushrod.

Thereby, the gearbox actuator can be manufactured efficiently.

Assembling the pin may comprise assembling the pin such that it is slidably received in a housing portion of an AMT housing and/or of a gearbox actuator housing.

Thereby, the gearbox actuator can be manufactured efficiently, without requiring a separate guide component for slidably receiving the pin to be attached to the AMT housing and/or the gearbox housing by means of a screwed or bolted attachment.

Optional features of the methods and the effects attained thereby correspond to the optional features and effects discussed in association with the gearbox actuator, the vehicle transmission system, and the commercial vehicle.

Further embodiments and configurations are defined by the dependent claims. These and other aspects of the invention will be apparent from and further explained with reference to the embodiments described with reference to the accompanying drawings, in which:
Fig. 1 is a partial perspective view of a gearbox actuator according to an embodiment of the invention;
Fig. 2 is a partial cross-sectional view of the gearbox actuator;
Fig. 3 is a partial perspective view of a pushrod of the gearbox actuator;
Fig. 4 is a partially broken-away partial view of the gearbox actuator when the pushrod and a further pushrod are in a neutral pushrod position;
Fig. 5 is a partially broken-away partial view of the gearbox actuator when the further pushrod is in a gear-engaged pushrod position and the pushrod is in the neutral pushrod position;
Fig. 6 is a partially broken-away perspective view of the gearbox actuator in a cross-sectional plane perpendicular to a longitudinal axis of the pushrod, as indicated by lines VI-VI in Fig. 4;
Fig. 7 is a further partially broken-away perspective view of the gearbox actuator in a cross-sectional plane perpendicular to the longitudinal axis of the pushrod, as indicated by lines VI-VI in Fig. 4;
Fig. 8 is a partially broken-away view of the pushrod with a viewing direction perpendicular to the longitudinal axis of the pushrod;
Fig. 9 is a schematic representation of an automated manual transmission comprising the gearbox actuator;
Fig. 10 is a schematic cross-sectional view of a gearbox actuator according to a further embodiment;
Fig. 11 is a schematic representation of a commercial vehicle comprising the gearbox actuator according to an embodiment;
Fig. 12 is a flow chart of a method of manufacturing a pushrod of the gearbox actuator; and
Fig. 13 is a flow chart of a method of manufacturing a pushrod of the gearbox actuator.

Embodiments of the invention will be described with reference to the drawings. In the drawings, elements with similar or identical configuration and/or function are designated with similar or identical reference signs.

Embodiments of the invention relate to a gearbox actuator. The gearbox actuator comprises a pushrod and a mechanisms to selectively block movement of the pushrod, to thereby prevent concurrent engagement of gears that should not be concurrently engaged.

As used herein, the term "gearbox actuator" refers to a component comprising a pushrod configured to selectively bring a gear of a gearbox into engagement and/or out of engagement with another gear. The pushrod may comprise or may be coupled to a shift fork. The pushrod may be displaceable along its pushrod axis by a displacement mechanisms, such as an electric motor or a fluidic displacement mechanism, e.g., a pneumatic mechanism (e.g., a piston) and/or a hydraulic mechanism. The pushrod may be associated with more than one gear, e.g., with gears for 1/R or with gears for 2/3. The gearbox actuator may be configured such that the pushrod is displaceable in two opposite directions along its longitudinal axis to bring a different one of several gears with which the pushrod is associated into an engaged state in which the respective gear engages a mating gear.

As used herein, the term "pushrod" refers to a component of the gearbox actuator that has a longitudinal axis. The pushrod may comprise an outer surface portion extending cylindrically around the longitudinal axis. The pushrod may comprise a recess formed thereinto, which may be formed by walls extending from a cylindrical outer surface portion of the pushrod in an inward direction relative to the cylindrical outer surface.

As used herein, the term "transverse" encompasses a perpendicular direction or arrangement. A transverse arrangement of two components or directions may be a perpendicular arrangement, without being limited thereto.

As used herein, the term "gear-engagement pushrod position" refers to a position of the pushrod in which the pushrod places at least one of the gears with which it is associated into an engaged (e.g., meshingly engaged) state. As mentioned, there can be several (e.g., two) gear-engagement pushrod positions for the pushrod, with the pushrod being displaced to opposite sides relative to its neutral position for the two different gear-engagement pushrod positions.

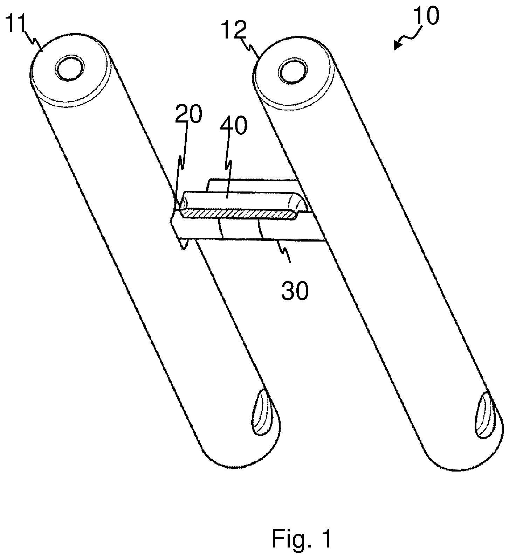

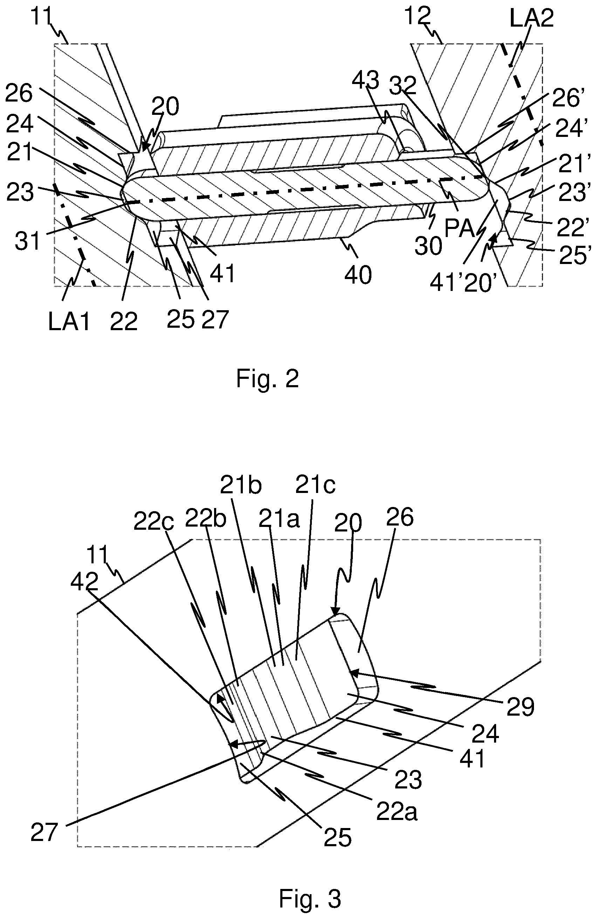

Fig. 1 is a partial perspective view of a gearbox actuator 10 according to an embodiment of the invention. Fig. 2 is a partial cross-sectional view of the gearbox actuator 10. Fig. 3 is a partial perspective view of a pushrod of the gearbox actuator 10. The gearbox actuator comprises a pushrod 11, a further pushrod 12, and a locking mechanism comprising a pin 30. The pushrod 11 may be coupled to or may comprise a shift fork (e.g., a shift fork for 1/R) configured to selectively bring a gear (or several gears) of a transmission into and/or out of engagement with a mating gear of the transmission. The further pushrod 12 may be coupled to or may comprise a further shift fork (e.g., a further shift fork for 2/3) configured to selectively bring a further gear (or several further gears) of the transmission into and/or out of engagement with a respective mating gear.

To ensure proper operation and prevent any potential conflicts, the gearbox actuator comprises the locking mechanism comprising the pin 30. The pin 30 may be configured as a locking pin. The locking mechanism is configured to prevent the pushrod 11 from moving from its neutral pushrod position (corresponding to, e.g., gear disengagement of the gear with which the pushrod 11 is associated or gear disengagement of several gears with which the pushrod 11 is associated) to a gear-engaged pushrod position (corresponding to, e.g., gear engagement of the gear with which the pushrod 11 is associated, or corresponding to gear engagement of one or several gears with which the pushrod 11 is associated) when the further pushrod 12 is in its gear-engaged pushrod position (corresponding to, e.g., gear engagement of the further gear with which the further pushrod 12 is associated, or corresponding to gear engagement of one of several further gears with which the further pushrod 12 is associated). The locking mechanism is also configured for preventing the further pushrod 12 from moving from its neutral pushrod position (corresponding to, e.g., gear disengagement of the further gear with which the further pushrod 12 is associated or of all of the further gears with which the further pushrod 12 is associated) to its further gear-engaged pushrod position (corresponding to, e.g., gear engagement of the further gear with which the further pushrod 12 is associated) when the pushrod 11 is in its gear-engaged pushrod position (corresponding to, e.g., gear engagement of the gear with which the pushrod 11 is associated, or corresponding to gear engagement of one or several gears with which the pushrod 11 is associated).

The locking mechanisms comprises a guide arrangement for the pin 30. The guide arrangement comprises a housing portion 40. As will be explained in more detail herein, the gearbox actuator is configured such that a recess in the pushrod 11 is delimited by a guide wall portion 41, 42 that guides the pin 30 as it is being displaced between various positions along a pin axis PA. The integration of a movement limiting function into the pushrod 11 and, if present, the further pushrod 12 allows the housing portion 40 that slidably receives the pin 30 to be formed in a simple and efficient manner. For illustration, the housing portion 40 may be a portion of a gearbox actuator housing and/or a transmission housing (e.g., an automated manual transmission (AMT) housing), obviating the need to attach a separate housing component for the pin 30 to the gearbox actuator housing or the AMT housing by means of screws or bolts. The housing portion 40 does not need to extend circumferentially around the pin 30.

The pushrod 11 extends along a longitudinal axis LA1. The pushrod 11 may have a cylindrical outer surface extending around the longitudinal axis LA1 for at least part of a length of the pushrod 11. The gearbox actuator 10 is configured such that the pushrod 11 is displaceable along the longitudinal axis LA1. The gearbox actuator 10 may configured such that the pushrod 11 is displaceable along the longitudinal axis LA1 in two opposite directions relative to its neutral pushrod position. The pushrod 11 may be mounted for reciprocating translatory displacement along the longitudinal axis LA1, so as to be movable between a neutral pushrod position (in which the gear associated with the pushrod 11 is not engaged) and a gear-engaged pushrod position (in which the gear associated with the pushrod 11 is engaged with a mating gear of the transmission) or several gear-engaged pushrod positions.

The pushrod 11 comprises a recess 20. The pin 30 is arranged so as to extend into the recess 20. The gearbox actuator 10 may be configured such that the pin 30 projects into the recess 20 when the pin 30 is in a first pin position in which the pin 30 projects into the recess 20 but does not block translatory displacement of the pushrod 11. Thereby, guide wall portions 41, 42 that delimit the recess 20 are configured to provide a movement limiting function of limiting or preventing movement of a pin end 31 projecting into the recess 20 in a direction that is transverse to both the longitudinal axis LA1 and a pin axis PA of the pin 30. The gearbox actuator 10 may be configured such that, when the pin 30 is in a second pin position, the pin 30 projects into the recess 20 and the pin end 31 interacts with a bottom surface 29 of the recess so as to block translatory displacement of the pushrod 11 out of its neutral pushrod position. The gearbox actuator 10 may be configured such that, upon pin displacement from the first pin position to the second pin position, the pin 30 moves in a direction perpendicular to the longitudinal axis LA1, along the pin axis PA, and away from the longitudinal axis LA1. The gearbox actuator 10 may be configured such that, upon pin displacement from the second pin position to the first pin position, the pin 30 moves in a direction perpendicular to the longitudinal axis LA1, along the pin axis PA, towards a longitudinal axis LA1.

The pin 30 extends from the pin end 31 to a further pin end 32. The pin 30 extends along the pin axis PA. The pin axis PA is transverse (e.g., perpendicular) to both the longitudinal axis LA1 and the further longitudinal axis LA2. The further longitudinal axis LA2 is parallel to the longitudinal axis LA1. I.e., the pushrod 11 and the further pushrod 12 extend parallel to each other, and the gearbox actuator 10 is configured to allow translatory displacement of the pushrod 11 and the further pushrod 12 along parallel directions (at least when the pushrod 11 and the further pushrod 12 are displaced one at a time). The pin 30 may be secured against displacement along the longitudinal axis LA1 and the further longitudinal axis LA2 by the housing portion 40 and guide wall portions 41, 42, 41' provided in the pushrod 11 and the further pushrod 12. The housing portion 40 may define a housing portion receptacle 43 that slidingly supports the pin 30, so as to allow the pin 30 to slide along the pin axis PA. The housing portion receptacle 43 may be shaped as a cylinder segment surface, e.g., as a half-cylinder segment. The housing portion receptacle 43 may be configured to interact with the guide wall portions 41, 42 of the pushrod 11 and the further guide wall portions of the further pushrod to limit or prevent displacement of the pin 30 in a direction that is perpendicular to both the longitudinal axis LA1 and the pin axis PA. The housing 40 may be configured such that it does not completely surround the pin 30 circumferentially around the pin axis PA.

The recess 20 is formed in the pushrod 11. The recess 20 forms a cavity that is recessed relative to a cylindrical outer envelope of the pushrod 11 around the longitudinal axis LA1. The recess 20 may be a slot-like cavity that extends along only part of the length of the pushrod 11 and that extends along only part of the circumference of the pushrod 11 (with the circumferential direction being the direction around the longitudinal axis LA1). The recess 20 may be a recess milled into the pushrod 11. It will be appreciated that it is possible to determine, from the pushrod 11, whether the recess 20 has been formed by milling or by other processing techniques.

The recess 20 is delimited by several wall portions extending from a surface portion of the pushrod 11 that is shaped as a cylinder segment around the longitudinal axis LA1. The several wall portions comprise a first guide wall portion 41 and a second guide wall portion 42, each extending parallel to the longitudinal axis LA1 and parallel to the pin axis PA. The first guide wall portion 41 and the second guide wall portion 42 may be planar and may be interconnected to adjacent surfaces, such as a first axial end surface 26 and a second axial end surface 27 that extend transverse to the longitudinal axis LA1, by curved transition portions. The pushrod 11 also comprises a recess bottom surface 29. The recess bottom surface 29 comprises a first ramp surface 21, a second ramp surface 22, and a depression 23 interposed (in a direction along the longitudinal axis LA1) between the first ramp surface 21 and the second ramp surface 22. The recess bottom surface 29 may comprise a first end portion 24. The first end portion 24 may be planar and may extend parallel to the longitudinal axis LA1. The first end portion 24 may be adjacent the first axial end surface 26 and may extend transverse (e.g., perpendicular) to the first axial end surface 26, the first guide wall portion 41, and the second guide wall portion 42. The recess bottom surface 29 may comprise a second end portion 25. The second end portion 25 may be planar and may extend parallel to the longitudinal axis LA1. The second end portion 25 may be adjacent the second axial end surface 27 and may extend transverse (e.g., perpendicular) to the second axial end surface 27, the first guide wall portion 41, and the second guide wall portion 42. The first end portion 25 and the second end portion 26 may be co-planar, extending in a common plane. The first end portion 25 and the second end portion 26 of the recess bottom surface 29 may be recessed into the pushrod 11 such that they are positioned at a smaller depth relative to the pushrod outer envelope than the depression 23, the first ramp surface 21, and the second ramp surface 22. The pushrod 11 may be configured such that the recess bottom surface 29 comprises, in a direction along the longitudinal axis LA1, the first end portion 24, the first ramp surface 21, the depression 23, the second ramp surface 23, and the second end portion 25.

The first ramp surface 21 may comprise several ramp portions, such as a central first ramp surface portion 21a (which may optionally be a planar portion inclined relative to the longitudinal axis LA1), a curved first ramp surface portion 21b, and another curved first ramp surface portion 21c. The curved first ramp surface portion 21b may be interposed between the central first ramp surface portion 21a and the depression 23 and may provide a transition from the central first ramp surface portion 21a to the depression 23, with the transition being a smooth transition that is free of edges. The other curved first ramp surface portion 21c may be interposed between the central first ramp surface portion 21a and the first end portion 24 and may provide a transition from the central first ramp surface portion 21a to the first end portion 24, with the transition being a smooth transition that is free of edges. The second ramp surface 22 may comprise several ramp portions, such as a central second ramp surface portion 22a (which may be optionally be a planar portion inclined relative to the longitudinal axis LA1, wherein an inclination of the central second ramp surface portion 22a relative to the longitudinal axis LA1 may have a same magnitude but opposite sign as compared to the inclination of the central first ramp surface portion 21a), a curved second ramp surface portion 22b, and another curved second ramp surface portion 22c. The curved second ramp surface portion 22b may be interposed between the central second ramp surface portion 22a and the depression 23 and may provide a transition from the central second ramp surface portion 22a to the depression 23, with the transition being free of edges. The other curved second ramp surface portion 22c may be interposed between the central second ramp surface portion 22a and the second end portion 26 and may provide a transition from the central second ramp surface portion 22a to the second end portion 25, with the transition being a smooth transition that is free of edges.

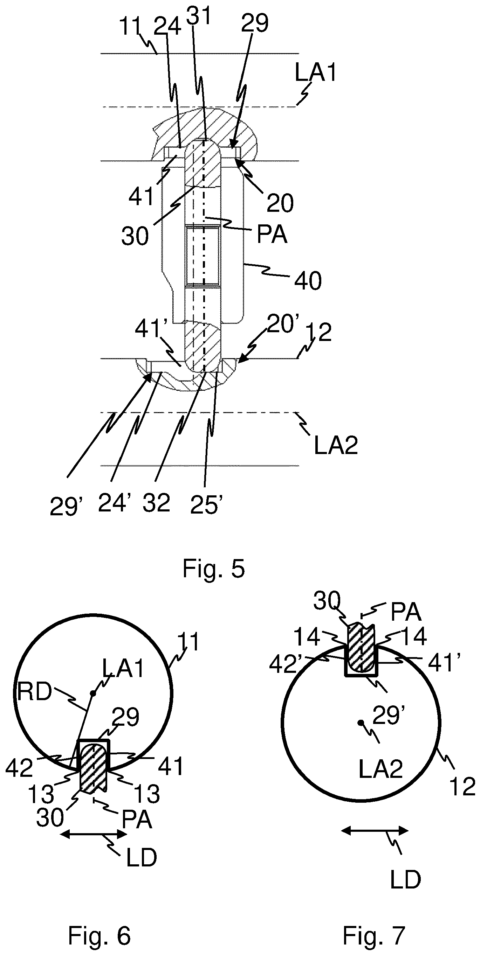

In the gearbox actuator of Fig. 1, the pin 30 is a locking pin that interacts with both the pushrod 11 and the further pushrod 12. The pin 30 is arranged so as to extend into a further recess 20' of the further pushrod 12. The gearbox actuator 10 may be configured such that the pin 30 projects into the further recess 20' when the pin 30 is in a pin position in which the pin 30 does not restrict movement of either the pushrod 11 or the further pushrod 12 (e.g., when both the pushrod 11 and the further pushrod 12 are in a neutral pushrod position). The gearbox actuator 10 may be configured such that the pin 30 projects into both the recess and the further recess 20' in all operating states of the gearbox actuator 10. Thereby, further guide wall portions 41', 42' (the further second guide wall portion 42' is visible in Fig. 6 and Fig. 7) that delimit the further recess 20' and that extend parallel to the further longitudinal axis LA2 and the pin axis PA are configured to provide a movement limiting function of limiting or preventing movement of a further pin end 32 projecting into the further recess 20' in the direction that is transverse to both the further longitudinal axis LA2 and the pin axis PA of the pin 30.

The further recess 20' is formed in the further pushrod 12. The further recess 20' forms a cavity that is recessed relative to a cylindrical outer envelope of the further pushrod 12 around the further longitudinal axis LA2. The further recess 20' may be a slot-like cavity that extends along only part of the length of the further pushrod 12 and that extends along only part of the circumference (with the circumferential direction being the direction around the longitudinal axis LA). The further recess 20' may be a recess milled into the further pushrod 12. It will be appreciated that it is possible to determine, from the further pushrod 12, whether the further recess 20' has been formed by milling or by other processing techniques.

The further recess 20' is delimited by several wall portions extending from a surface portion of the further pushrod 12 that is shaped as a cylinder segment around the further longitudinal axis LA2. The several wall portions comprise a further first guide wall portion 41' and a further second guide wall portion 42", each extending parallel to the further longitudinal axis LA2 and parallel to the pin axis PA. The further first guide wall portion 41' and the further second guide wall portion 42' may be planar and may be interconnected to adjacent surfaces, such as a further first axial end surface 26' and a further second axial end surface 27 that extend transverse to the further longitudinal axis LA2, by curved transition portions. The further pushrod 12 also comprises a further recess bottom surface 29'. The further recess bottom surface comprises a further first ramp surface 21', a further second ramp surface 22', and a further depression 23' interposed (in a direction along the further longitudinal axis LA2) between the further first ramp surface 21' and the further second ramp surface 22'. The further recess bottom surface 29' may comprise a further first end portion 24'. The further first end portion 24' may be planar and may extend parallel to the further longitudinal axis LA2. The further first end portion 24' may be adjacent the further first axial end surface 26' and may extend transverse (e.g., perpendicular) to the further first axial end surface 26', the further first guide wall portion 41', and the further second guide wall portion 42'. The further recess bottom surface 29' may comprise a further second end portion 25'. The further second end portion 25' may be planar and may extend parallel to the further longitudinal axis LA2. The further second end portion 25' may be adjacent the further second axial end surface 27 and may extend transverse (e.g., perpendicular) to the further second axial end surface 27, the further first guide wall portion 41' and the further second guide wall portion 42'. The further first end portion 25' and the further second end portion 26' may be co-planar, extending in a common plane. The further first end portion 25' and the further second end portion 26' of the further recess bottom surface 29' may be recessed into the further pushrod 12 such that they are positioned at a smaller depth relative to the pushrod outer envelope than the further depression 23', the further first ramp surface 21', and the further second ramp surface 22'. The further pushrod 12 may be configured such that the further recess bottom surface 29' comprises, in a direction along the further longitudinal axis LA2, the further first end portion 24', the further first ramp surface 21', the further depression 23', the further second ramp surface 23', and the further second end portion 25'.

The further recess 20' may optionally comprise any one or any combination of the various features discussed in association with the recess 20. The recess 20 and the further recess 20' may have an identical geometrical configuration. However, the further recess 20' and the recess 20 may be different from each other in shape and/or dimensions. For illustration, a length of the further first end portion 24' and of the second further second end portion 25' may be different from (e.g., larger than) a length of the first end portion 24 and of the second end portion 25, e.g., when the travel path of the further pushrod 12 between its neutral and gear-engaged pushrod positions is different from (e.g., larger than) that of the pushrod 11.

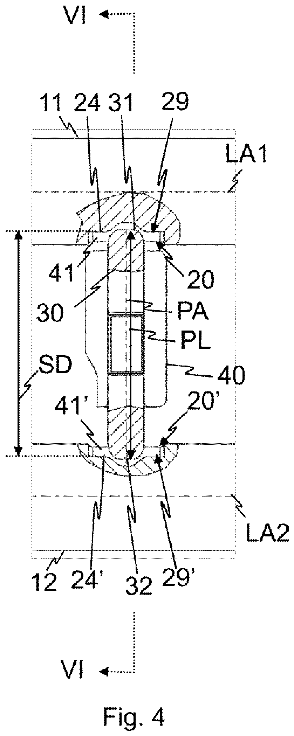

Operation of the gearbox actuator 10 will be described in more detail with reference to Fig. 4, Fig. 5, Fig. 6, and Fig. 7. Fig. 4 is a partially broken-away partial view of the gearbox actuator 10 when the pushrod 11 and the further pushrod 12 are in their neutral pushrod positions, with a viewing direction of Fig. 4 being perpendicular to the longitudinal axis LA1 and the further longitudinal axis LA2. Fig. 5 is a partially broken-away partial view of the gearbox actuator 10 when the further pushrod 12 is in a gear-engaged pushrod position and the pushrod 11 is secured in the neutral pushrod position by the pin 30 being secured in its second pin position, with the viewing direction of Fig. 5 being perpendicular to the longitudinal axis LA1 and the further longitudinal axis LA2. Fig. 6 is a partially broken-away perspective view of the gearbox actuator 10 in a cross-sectional plane perpendicular to the longitudinal axis LA1 of the pushrod 11, as indicated by lines VI-VI in Fig. 4. Fig. 7 is a further partially broken-away perspective view of the gearbox actuator 10 in the cross-sectional plane perpendicular to the longitudinal axis LA1 of the pushrod 11, as indicated by lines VI-VI in Fig. 4.

Fig. 4 shows a view illustrating an operating state of the gearbox actuator 10 in which the pushrod 11 and the further pushrod 12 are in their neutral pushrod positions. The pin 30 is in its first pin position in which it projects into both the recess 20 and the further recess 20' but does not block either one of the pushrod 11 and the further pushrod 12 from being axially displaced. This configuration provides the effect that the first guide wall portion 41, the second guide wall portion 42, the further first guide wall portion 41' and the further second guide wall portion 42' can cooperate, optionally in association with the housing portion 40, to limit displacement of the pin 30 in the direction LD that is transverse to the longitudinal axis LA1 and the pin axis PA.

Fig. 5 shows a view illustrating another operating state of the gearbox actuator 10 in which the pin 30 is in its second position, in which the pin end 31 is received between and secured in the depression 23, preventing the pushrod 11 from being moved out of its neutral pushrod position. Transition between the first pin position (Fig. 4) and the second pin position (Fig. 5) is associated with an axial pin displacement of the pin 30 along the pin axis PA. The gearbox actuator 10 is configured such that the pin 30 transitions to the second pin position responsive to a gearbox actuator state in which the pushrod 11 must not be displaced to its gear-engaged pushrod position. In the illustrated embodiment, the further pushrod 12 is configured to displace the pin 30 from its first pin position (Fig. 4) to the second pin position (Fig. 5), with one of the further first and second ramp surfaces 21', 22' contacting the further pin end 32 and effecting translatory displacement of the pin 30 along the pin axis 30 when the further pushrod 12 is axially displaced by, e.g., a piston or electric motor. When the further pushrod 12 is in its further gear-engaged pushrod position, one of the further first and second end surfaces 24', 25' secures the pin 30 in the second pin position, e.g., by abutment of the further pin end 32 on the one of the further first and second end surfaces 24', 25'. The gearbox actuator 10 may be configured such that a distance between a plane in which the further first and second end surfaces 24', 25' extend and a most recessed point of the depression 23, measured along the pin axis PA, is substantially the same as the pin length between the pin end 31 and the further pin end 32, measured parallel to the pin axis PA.

When the further pushrod 12 returns to its neutral pushrod position (as shown in Fig. 4), the pin 30 is no longer secured in the second pin position. In this state, displacement of the pushrod 11 effects pin displacement of the pin 30 along the pin axis PA. When the pushrod 11 is displaced from its neutral pushrod position to its gear-engaged pushrod position, one of the first and second end surfaces 24, 25 of the recess bottom surface 29 of the pushrod 20 secure the pin 30 in a pin position in which it projects into the further depression 23' and blocks the further pushrod 12 against displacement into its further engaged state. The gearbox actuator 10 may be configured such that a distance between a plane in which the first and second end surfaces 24, 25 extend and a most recessed point of the further depression 23', measured along the pin axis PA, is substantially the same as the pin length between the pin end 31 and the further pin end 32, measured parallel to the pin axis PA.

Fig. 6 and Fig. 7 show partial cross-sectional views taken in a cross-sectional plane perpendicular to the longitudinal axis LA1 and the further longitudinal axis LA2. The first guide wall portion 41 and the second guide wall portion 42 extend from an outer pushrod surface portion 13 of the pushrod 11, in a direction that is parallel to the longitudinal axis LA1 and parallel to the pin axis PA. The further first guide wall portion 41' and the further second guide wall portion 42' extend from a further outer pushrod surface portion 14 of the further pushrod 12, in a direction that is parallel to the further longitudinal axis LA2 and parallel to the pin axis PA. The gearbox actuator 10 is configured such that, for any position of the pin 30, the pin 30 projects both into the recess 20 and into the further recess 20'. Thus, the gearbox actuator 10 is configured such that, for any position of the pin 30, the pin end 31 remains interposed between the first guide wall portion 41 and the second guide wall portion 42 and the further pin end 32 remains interposed between the further first guide wall portion 41' and the further second guide wall portion 42'. Thereby, the first guide wall portion 41, the second guide wall portion 42, the further first guide wall portion 41', and the further second guide wall portion 42' are configured to cooperatively limit or prevent displacement of the pin 30 in the direction LD that is perpendicular to both the longitudinal axis LA1 and the pin axis PA, thereby guiding the pin 30 through the housing portion 40. The housing portion 40 may be configured to limit or prevent displacement of the pin 30 in a direction along the longitudinal axis LA1 and the further longitudinal axis LA2.

The recess 20 may be configured such that the first guide wall portion 41 and the second guide wall portion 42 are non-radially directed, i.e., they are different from any radial direction RD extending from the longitudinal axis LA1 in a direction perpendicular to the longitudinal axis LA1.

The recess 20 may be configured such that a distance between the first guide wall portion 41 and the second guide wall portion 42 is equal to or greater than (e.g., up to 1.2 times or up to 1.1 times) a pin diameter of the pin 30 (which pin diameter is measured along the direction LD that is perpendicular to both the longitudinal axis LA1 and the pin axis PA). Alternatively or additionally, the further recess 20' (if present) may be configured such that a distance between the further first guide wall portion 41' and the further second guide wall portion 42' is equal to or greater than (e.g., up to 1.2 times or up to 1.1 times) the pin diameter of the pin 30 measured along the direction LD that is perpendicular to both the longitudinal axis LA1 and the pin axis PA.

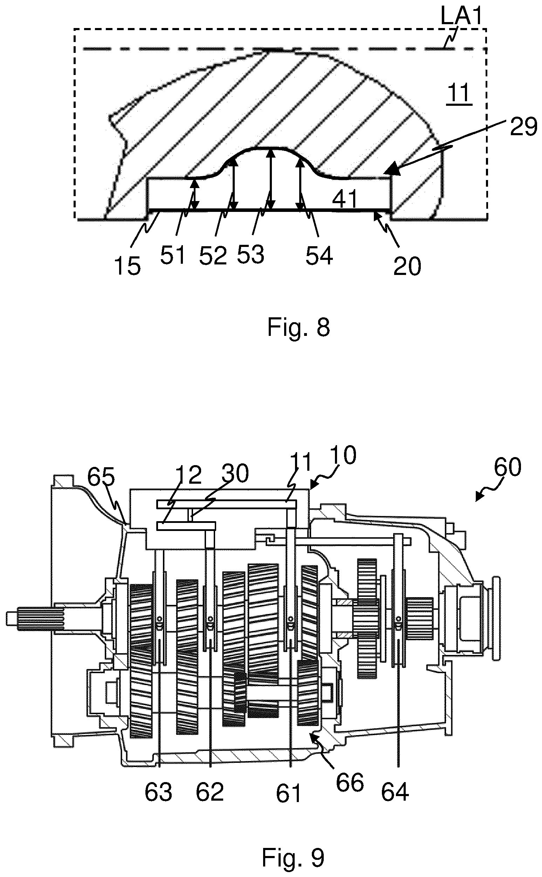

Fig. 8 shows a partially broken-away view of the pushrod 11 in a viewing direction perpendicular to the longitudinal axis LA1 and perpendicular to a plane in which the first and second guide wall portions 41, 42 extend. The first guide wall portion 41 extends from an outer surface edge 15 of the pushrod 11, with the outer surface edge 15 being positioned on a cylindrical surface portion around the longitudinal axis LA1. The first guide wall portion 41 extends over a depth (measured perpendicular to the longitudinal axis LA1 and along the plane of the first guide wall portion 41) into the pushrod 11. The depth varies non-monotonously along the longitudinal axis LA1. For illustration, the guide wall portion 41 may extend to a minimum depth 51 of the pushrod recess 20 from the outer surface edge 15 (e.g., at the second end portion 25 of the recess bottom surface 29) at one axial position along the longitudinal axis LA1. The guide wall portion 41 may extend to an increased depth 52 from the outer surface edge 15 (e.g., at the second ramp surface 22 of the recess bottom surface 29) at another axial position along the longitudinal axis LA1 located further towards the first end portion 24 of the recess bottom surface 29. The first guide wall portion 41 may extend to a maximum depth 53 from the outer surface edge 15 (e.g., at the most recessed part of the depression 23 of the recess bottom surface 29) at another axial position along the longitudinal axis LA1 located still further towards the first end portion 24 of the recess bottom surface 29. The guide wall portion 41 may extend to a decreased depth 54, which is smaller than the maximum depth 53, from the outer surface edge 15 (e.g., at the first ramp surface 21 of the recess bottom surface 29) at another axial position along the longitudinal axis LA1 located further towards the first end portion 24 of the recess bottom surface 29. Thus, the depth by which the first guide wall portion 41 extends from the outer surface edge 15 may vary non-monotonously between the first end portion 24 and the second end portion 25.

The gearbox actuator 10 may be configured to shift gears of an AMT into and out of engagement, while preventing concurrent engagement of gears that should not concurrently be brought into engagement. At the same time, the configuration of the pushrod 11 and, if present, the further pushrod 12 facilitate manufacture of the gearbox actuator by obviating the need for a dedicated pin housing for the pin 30 that must be attached to the housing of the gearbox actuator or of the AMT by means of screws or bolts. The housing portion 40 does not need to extend circumferentially around the pin axis PA, allowing the housing portion 40 to be formed as a portion of an AMT housing or gearbox actuator housing.

Fig. 9 shows a schematic, partially broken-away view of a transmission system implemented as an AMT 60. The AMT 60 comprises a gear set 66 comprising a plurality of gears that can be brought into and out of engagement in a controlled manner. The AMT 60 comprises the gearbox actuator 10. The gearbox actuator 10 comprises a first shift fork 61 (e.g., a 1/R shift fork) that may be integral with or connected to the pushrod 11. The gearbox actuator 10 comprises a second shift fork 62 (e.g., a 2/3 shift fork) that may be integral with or connected to the further pushrod 12. The gearbox actuator 10 may optionally comprise additional shift forks, such as a third shift fork 63 and/or a fourth shift fork 64. The gearbox actuator 10 may comprise pneumatic, hydraulic, and/or electric displacement mechanisms to effect displacement of the pushrod 11 and/or the further pushrod 12 (optionally, of additional pushrods that may be associated with the additional shift forks if present). The AMT 60 is configured such that the pushrod 11 causes, via the first shift fork 61, engagement of a gear (or of any of several gears) with a respective mating gear of the gear set 66. The AMT 60 is configured such that the further pushrod 12 causes, via the second shift fork 62, engagement of a further gear (or of any of several further gears) of the gear set with a respective mating further gear. The gearbox actuator 10 is configured to prevent, by means of a locking mechanism that comprises the pin 30 interacting with the pushrod 11 and the further pushrod 12, operating states in which both the pushrod 11 and the further pushrod 12 are concurrently set to a gear-engaged pushrod position, in which they would cause an operating state not foreseen by the AMT 60.

The AMT 60 comprises an AMT housing 65. The AMT housing 65 comprises the housing portion 40 in which the pin 30 is slidably received. The AMT housing 65 may comprise the housing portion 40 as an integral component, without requiring screwed or bolted attachment of a dedicated pin housing to the AMT housing 65. This configuration is facilitated by the integration of pin movement limiting functions into the pushrod 11 and, if present, the further pushrod 12.

While a gearbox actuator 10 has been described in which the pin 30 is configured as a locking pin interacting with both the pushrod 11 and the further pushrod 12, further embodiments may be implemented in a gearbox actuator 10 comprising a detent pin.

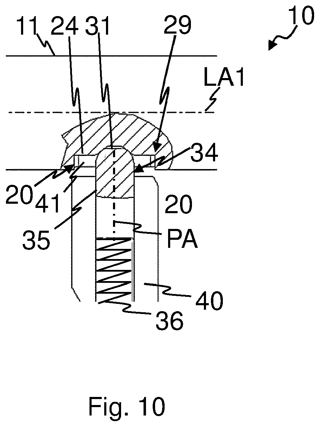

Fig. 10 shows a partial, partially broken-away view of a gearbox actuator 10 according to an embodiment. The pushrod 11 comprises the recess 20 and first and second guide wall portions 41 delimiting the recess 20, as previously described. The gearbox actuator comprises a detent pin 34. The detent pin 34 comprises a bias member 36, such as a spring or other member having elastic return characteristics, to bias a pin member 35 to selectively lock the pushrod 11 in position.

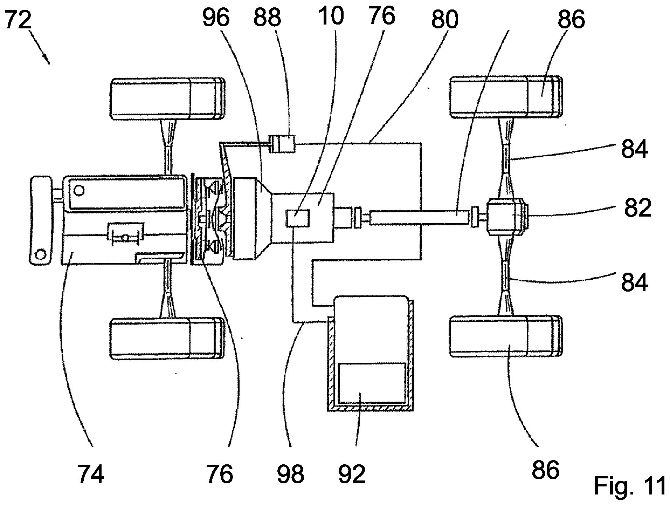

Fig. 11 shows a schematic representation of a motor vehicle 72. The motor vehicle 72 comprises an engine 74 coupled to a transmission 78 through a friction clutch 76. The transmission 78 is connected with a differential 82 through an output shaft 80, which drives a motor vehicle wheel 86 through one half axle 84 each. The friction clutch 66 is activated by an actuator 88 which is connected with a control unit 92 through a signal line 90. The transmission 78 is configured to be actuated by a gearbox actuator 10. The gearbox actuator 10 may be arranged on or at a housing 96 of the transmission 78. The gearbox actuator 10 may be connected with the control unit 92 by a further signal line 98.

The gearbox actuator 10 may be mounted on the transmission housing 96 of the transmission 78, wherein the housing 96 comprises the housing portion 40 that slidably receives the pin 30 therein.

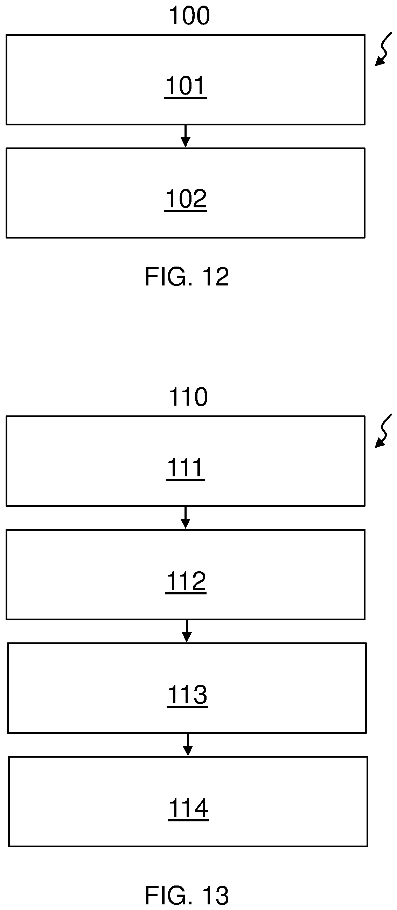

Fig. 12 is a flow chart of a method 100 of a method of manufacturing a pushrod 11, 12 for a gearbox actuator 10. The method 100 comprises a process block 101 of obtaining a pushrod 11, 12 comprising a cylindrical outer surface portion. The method 100 comprises a process block 102 of performing a milling operation to form the pushrod recess 20, 20' in the pushrod 11, 12. Thereby, the pushrod recess 20, 20' can be formed to have any one, or any combination of features, discussed in association with the gearbox actuator 10.

Fig. 13 is a flow chart of a method 110 of manufacturing the gearbox actuator 10 (such as the gearbox actuator according to any aspect or embodiment). The method 110 , comprising a process block 111 of performing a milling operation to form a pushrod recess 20 in a pushrod 11. The method 110 comprises a process block 112 of assembling the pushrod 11 with at least one displacement mechanism (such as an electromotor or a fluidic displacement mechanism, e.g., a pneumatic or hydraulic piston). The method 110 comprises a process block 113 of assembling the pushrod 11 with a shift fork 61 that is attached to the pushrod 11 to effect gear engagement and/or disengagement for an AMT 60. The method 110 comprises a process block 114 of assembling the pin 30 such that the pin 30 projects into the recess 20 of the pushrod 10. The pin 30 may be assembled such that it is slidingly received in a housing portion 40 of an AMT housing 65 or of another transmission system.

While embodiments have been described with reference to the drawings, modifications and alterations may be implemented in other embodiments.

For illustration, while embodiments have been described in association with an AMT, the invention is not limited to AMTs. For further illustration, while embodiments have been described in which a gearbox actuator comprises a locking mechanism configured to prevent concurrent displacement of the pushrod 11 associated with gears 1/R and the further pushrod 12 associated with gears 2/3, the invention is not limited to these specific pushrods. The invention may be applied to any combination of pushrods for which concurrent engagement is to be prevented. For still further illustration, a gearbox actuator according to an embodiment may comprise more than two pushrods that respectively comprise a recess formed therein, with the recesses being formed as slot-like recesses that extend around only part of a circumference of the pushrod in which they are being formed. For still further illustration, the recess 20 and the further recess 20' may have different shapes and/or dimensions (e.g., different lengths along the longitudinal axis, different ramp inclinations, etc.). For still further illustration, the gearbox actuator need not be configured such that a pushrod 11 is displaceable in opposite directions relative to its neutral pushrod positions. In this case, the second ramp surface 22 and the second end surface 25 need not be provided. I.e., the recess bottom surface 29 of the pushrod 11 and/or the further recess bottom surface 29' of the further pushrod 12 can have different configurations, depending on the implementation of the gearbox actuator 10.

Various effects and advantages are attained by embodiments of the invention. Embodiments provide improved gearbox actuators that reduce or eliminate the risk of inadvertent concurrent engagement of gears of a gearbox that should not be concurrently engaged, while providing ease of manufacture and installation.

### List of Reference Numerals (part of the description)

- 10: gearbox actuator
- 11: pushrod
- 12: further pushrod
- 13: outer pushrod surface portion
- 14: further outer pushrod surface portion
- 15: outer surface edge
- 20: recess
- 20': further recess
- 21: first ramp surface
- 21a: central first ramp surface portion
- 21b: curved first ramp surface portion
- 21c: other curved first ramp surface portion
- 21': further first ramp surface
- 22: second ramp surface
- 22': further second ramp surface
- 23: depression
- 23': further depression
- 24: first end portion
- 24': further first end portion
- 25: second end portion
- 25': further second end portion
- 26: first axial end surface
- 26': further first axial end surface
- 27: second axial end surface
- 27': further second axial end surface
- 29: recess bottom surface
- 29': further recess bottom surface
- 30: pin
- 31: pin end
- 32: further pin end
- 34: detent pin
- 35: pin member
- 36: bias member
- 40: housing portion
- 41: first guide wall portion
- 41': further first guide wall portion
- 42: second guide wall portion
- 42': further second guide wall portion
- 43: housing portion passage
- 51: depth
- 52: increased depth
- 53: maximum depth
- 54: decreased depth
- 60: automated manual transmission (AMT)
- 61: first shift fork
- 62: second shift fork
- 63: third shift fork
- 64: fourth shift fork
- 65: gearbox actuator housing or AMT housing
- 66: gear set
- 67: shift fork
- 68: further shift fork
- 72: vehicle
- 74: engine
- 76: friction clutch
- 78: transmission
- 80: output shaft
- 82: differential
- 84: half axle
- 86: vehicle wheel
- 88: actuator
- 90: signal line
- 92: control unit
- 96: housing
- 98: line
- 100: method
- 101, 102: process block
- 110: method
- 111, 112: process block
- LA1: longitudinal axis
- LA2: further longitudinal axis
- LD: movement limiting direction
- PA: pin axis
- PL: pin length
- RD: radial direction
- SD: surface distance

## Claims

1. A gearbox actuator (10), comprising:
a pushrod (11) extending along a longitudinal axis (LA1), wherein the pushrod (11) comprises a pushrod recess (20);
a pin (30) extending along a pin axis (PA), the pin axis (PA) being transverse to the longitudinal axis (LA1); and
a pin guide arrangement (40, 41, 42, 41', 42') configured to guide the pin (30) upon pin displacement along the pin axis (PA) between
a first pin position in which the pin (30) projects into the pushrod recess (20) and is configured to allow displacement of the pushrod (11) along the longitudinal axis (LA1) and
a second pin position in which the pin (30) projects into the pushrod recess (20) and is configured to secure the pushrod (11) against displacement along the longitudinal axis (LA1),
wherein the pin guide arrangement (40, 41, 42, 41', 42') comprises at least one guide wall portion (41, 42) formed in the pushrod (11), the at least one guide wall portion (41, 42) being configured to limit or prevent displacement of a pin end (31) of the pin (30) in a direction (LD) that is perpendicular to both the longitudinal axis (LA1) and the pin axis (PA).

2. The gearbox actuator (10) of claim 1,
wherein the at least one guide wall portion (41, 42) comprises a first guide wall portion (41) that extends parallel to the longitudinal axis (LA1) and parallel to the pin axis (PA), and wherein the at least one guide wall portion (41, 42) comprises a second guide wall portion (42) that extends parallel to the longitudinal axis (LA1) and parallel to the pin axis (PA), the second guide wall portion (41, 42) being offset from the first guide wall portion (41, 42) along the direction (LD) that is transverse to both the longitudinal axis (LA1) and the pin axis (PA).

3. The gearbox actuator (10) of claim 2, wherein the first guide wall portion (41) and the second guide wall portion (42) are configured to contact the pin (30) to guide the pin (30) upon displacement of the pin (30) between the first pin position and the second pin position.

4. The gearbox actuator (10) of any one of the preceding claims, wherein the pushrod recess (20) extends along only part of a circumference of the pushrod (11).

5. The gearbox actuator (10) of any one of the preceding claims, wherein the at least one guide wall portion (41, 42) extends to a depth (51, 52, 53, 54) from a pushrod outer surface portion (13, 15) surrounding the pushrod recess (20), the depth (51, 52, 53, 54) being measured in a direction perpendicular to the longitudinal axis (LA1), wherein the depth (51, 52, 53, 54) varies non-monotonously along the longitudinal axis (LA1).

6. The gearbox actuator (10) of any one of the preceding claims, wherein the pushrod recess (20) comprises a recess bottom surface (29) extending from the at least one guide wall portion (41, 42), the recess bottom surface (29) comprising a first ramp surface (21; 21a, 21b, 21c) and a second ramp surface (22; 22a, 22b, 22c), wherein the pin (30) is configured such that the pin end (31) of the pin (30) that projects into the pushrod recess (20) is positioned between the first ramp surface (21; 21a, 21b, 21c) and the second ramp surface when the pin (30) is in the second pin position (22; 22a, 22b, 22c).

7. The gearbox actuator (10) of claim 6, wherein the recess bottom surface (29) comprises a depression (23) configured to receive the pin end (31) therein when the pin (30) is in the second pin position, the depression (23) being arranged between the first ramp surface (21; 21a, 21b, 21c) and the second ramp surface (22; 22a, 22b, 22c).

8. The gearbox actuator (10) of claim 6 or claim 7, wherein the first ramp surface (21; 21a, 21b, 21c) and the second ramp surface (22; 22a, 22b, 22c) are configured to effect the displacement of the pin (30) along the pin axis (PA) responsive to a pushrod displacement of the pushrod (11) along the longitudinal axis (LA1).

9. The gearbox actuator (10) of any one of the preceding claims, wherein the pin guide arrangement (40, 41, 42, 41', 42') comprises a housing portion (40), the housing portion (40) comprising a concavity (43) configured to slidably receive the pin (30) therein.

10. The gearbox actuator (10) of any one of the preceding claims, further comprising: a further pushrod (12) extending along a further longitudinal axis (LA2), the further longitudinal axis (LA2) being parallel to the longitudinal axis (LA1), wherein the further pushrod (12) comprises a further pushrod recess (20'), wherein the pin (30) is configured to extend into the further pushrod recess (20') both when the pin (30) is in the first pin position and when the pin (30) is in the second pin position.

11. The gearbox actuator (10) of claim 10, wherein the pin guide arrangement (40, 41, 42, 41', 42') comprises at least one further guide wall portion (41', 42') formed in the further pushrod (12), the at least one further guide wall portion (41', 42') being configured to limit or prevent displacement of a further pin end (32) of the pin (30) in the direction (LD) that is perpendicular to both the further longitudinal axis (LA2) and the pin axis (PA).

12. The gearbox actuator (10) of claim 10 or claim 11, wherein the further pushrod (12) is displaceable between a neutral pushrod position and a gear-engagement pushrod position, wherein the gearbox actuator (10) is configured such that the further pushrod (12) secures the pin (30) in the second pin position when the further pushrod (12) is in the further gear-engagement pushrod position.

13. A vehicle transmission system (60; 10, 78), comprising
a gearbox (78) and
the gearbox actuator (10) of any one of the preceding claims configured to selectively cause gears of the gearbox (78) to engage.

14. A commercial vehicle (72), comprising the gearbox actuator (10) of any one of claims 1 to 12 or the vehicle transmission system (60; 10, 78) of claim 13.

15. A method of manufacturing the pushrod (11) for the gearbox actuator (10) of any one of claims 1 to 12, of the vehicle transmission system (60; 10, 78) of claim 13, or of the commercial vehicle (72) of claim 14, the method comprising performing a milling operation to form the pushrod recess (20) in the pushrod (11).
